# EUROPEAN PATENT APPLICATION

(11) **EP 3 617 865 A1**
(43) Date of publication of application: **04.03.2020**
(21) Application number: 19185199.7
(22) Date of filing: 09.07.2019
(51) Int. Cl.: G06F 3/0488

(54) **INPUT DEVICE, MOBILE TERMINAL, INPUT DEVICE CONTROL METHOD, AND INPUT DEVICE CONTROL PROGRAM**

(30) Priority: 27.08.2018 JP 2018158342
(71) Applicant: OMRON Corporation, Shiokoji-dori, Shimogyo-ku Kyoto-shi Kyoto 600-8530 (JP)
(72) Inventor: Uebuchi, Takao, Kyoto-shi, Kyoto 604-8152 (JP)
(74) Representative: Kilian Kilian & Partner

(57) **Abstract**

A software keyboard for improving user operability includes an input unit (21) that receives an input corresponding to a pressed position on a screen of a display (2), a display control unit (23) that displays a key image (111) associated with a keyboard on the screen of the display (2) in a manner superimposed on a background image (121), and an input mode setting unit (22) that sets, in response to an input for selecting an input mode received by the input unit (21), an input mode of the input unit (21) to a first input mode to receive a character input based on the key image (111) or to a second input mode to receive an input for changing a display form of the background image (121) in accordance with the received input.

## Description

### CROSS-REFERENCE TO RELATED APPLICATION

This application claims priority to Japanese Patent Application No. 2018-158342 filed on August 27, 2018, the contents of which are incorporated herein by reference.

### FIELD

The present invention relates to a technique associated with a software keyboard.

### BACKGROUND

A known portable terminal such as a smartphone and a tablet terminal includes a software keyboard for inputting characters. As well known, a software keyboard receives a character input operation performed by a user using a touchscreen input device through a graphical user interface (GUI). A software keyboard implements processing using software, or specifically displays an image of keys on a display screen and outputs characters input by a user in accordance with the positions on the screen pressed by the user and detected by an input device.

Some software keyboards allow a user to select an image (background image) that matches the user's taste or preference as a background of a key image appearing on a display screen (refer to, for example, Patent Literature 1). Patent Literature 1 further describes the use of an advertisement as a background image.

### CITATION LIST

### PATENT LITERATURE

Patent Literature 1: Japanese Patent No. 5848770

### SUMMARY

### TECHNICAL PROBLEM

However, a software keyboard described in, for example, Patent Literature 1 merely displays a key image together with a still image or a moving image currently set as the background on the display screen. A user cannot change the display form of the background image while the key image is displayed. The user thus cannot change the display form of the background image although the user feels distracted by the background image during an operation of inputting a series of characters.

One or more aspects of the present invention are directed to a technique associated with a software keyboard for easily changing the display form of a background image while a key image is displayed, and improving user operability.

### SOLUTION TO PROBLEM

In response to the above issue, an input device according to one or more aspects of the present invention has the structure described below.

An input unit receives an input corresponding to a pressed position on a screen of a display. For example, a touchscreen panel for detecting the pressed position is attached onto the screen of the display. The input unit receives a signal indicating the pressed position on the screen detected by the touchscreen panel.

A display control unit displays a key image associated with a keyboard on the screen of the display in a manner superimposed on a background image. The background image may be a still image or a moving image. For example, the display control unit may generate a composite image by superimposing the key image on the background image and display the composite image on the screen of the display, or may overlay a first layer containing the key image on a second layer containing the background image and display these layers on the screen of the display. In this case, the first layer is transparent.

The display control unit may display the key image and the background image on the screen of the display in a manner viewable by the user, or may display either the key image or the background image on the screen of the display as appropriate.

An input mode setting unit sets, in response to an input for selecting an input mode received by the input unit, an input mode of the input unit to a first input mode to receive a character input based on the key image or to a second input mode to receive an input for changing a display form of the background image in accordance with the received input.

This structure allows a user to perform, while the key image is displayed, an input operation for inputting characters by selecting the first input mode and an input operation for changing the display form of the background image by selecting the second input mode. This allows easy change of the display form of a background image, and improves user operability.

The first input mode may receive pictorial symbols (emoji), in addition to characters of a language such as hiragana characters, Chinese (kanji) characters, alphanumeric characters, and signs. A pictorial symbol (or emoji) is an illustration of one-character size. When the background image is a still image, the display form of the background image is changed by, for example, enlarging, reducing, or rotating the still image (background image). When the background image is a moving image, the display form of the background image is changed by, for example, pausing a playback, resuming the playback, or changing the playback speed in addition to enlarging, reducing, or rotating the moving image (background image).

The first input mode may be a mode to receive no input for changing the display form of the background image, and the second input mode may be a mode to receive no character input based on the key image. This structure prevents a user input operation for inputting characters in the first input mode from being detected as the operation for changing the display form of the background image, and thus prevents the display form of the background image from being changed unintentionally. This structure also prevents a user input operation for changing the display form of the background image in the second input mode from being detected as the operation for inputting characters, and thus prevents a character input operation from being received unintentionally.

The input unit receives an input operation for selecting the second mode when the first mode is currently selected, and receives an input operation for selecting the first mode when the second mode is currently selected.

When the background image is moving image content distributed by an external device such as a server connected to the Internet, the background image may be played back after downloaded or may played back by streaming. Streaming can save the storage capacity of a storage medium for storing moving image content associated with the background image.

When the input mode setting unit sets the input unit to the second input mode, the display control unit may display the key image in an unviewable manner on the screen of the display. This allows the user to view the background image independently of the key image.

### ADVANTAGEOUS EFFECTS

The technique according to the above aspects of the present invention allows easy change of the display form of a background image while a key image is displayed, and improves user operability.

### BRIEF DESCRIPTION OF THE DRAWINGS

Fig. 1 is an external schematic diagram of a mobile terminal.
Figs. 2A and 2B are diagrams describing an example image associated with a software keyboard appearing in a keyboard display area, with Fig. 2A showing a key image and Fig. 2B showing a background image.
Fig. 3A is a diagram describing an example display screen in the software keyboard display area in a character input mode, and Fig. 3B is a diagram describing an example display screen in the software keyboard display area in a display form change mode.
Fig. 4 is a block diagram of the mobile terminal showing its main components.
Fig. 5 is a flowchart showing a character input process performed by the mobile terminal.
Fig. 6 is a flowchart showing the character input process performed by the mobile terminal.
Fig. 7 is a flowchart showing the character input process performed by the mobile terminal.
Figs. 8A and 8B are diagrams showing a display screen for a software keyboard according to another embodiment.

### DETAILED DESCRIPTION

One or more embodiments of the present invention will now be described.

### 1. Example Use

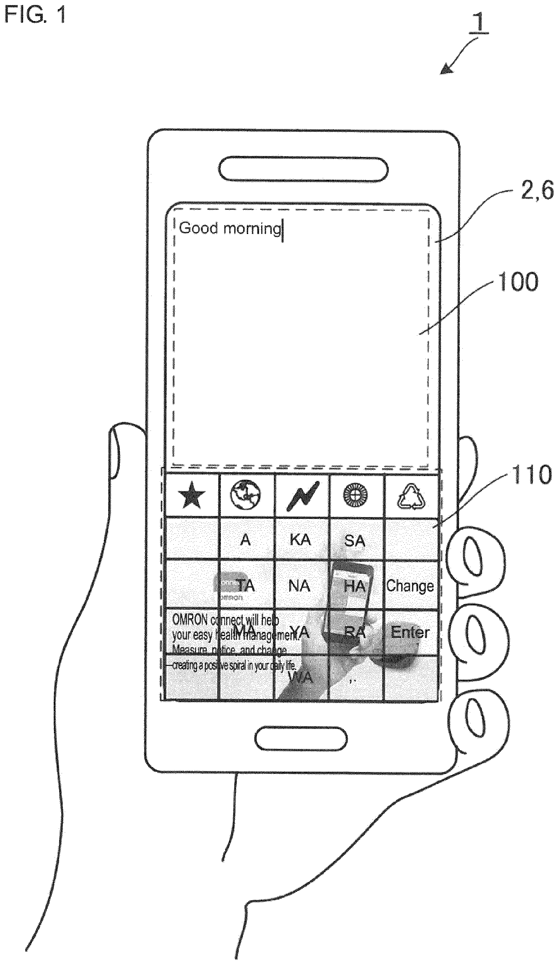

Fig. 1 is an external schematic diagram of a mobile terminal including an input device according to an embodiment of the present invention. The input device according to the present embodiment is a software keyboard with which a user performs a character input operation. The software keyboard implements processing using software to receive a character input operation performed by a user through a graphical user interface (GUI) using a touchscreen input device.

Fig. 1 shows an example screen appearing on a display 2 in a mobile terminal 1 in a character input mode. A touchscreen panel 6 is attached onto the screen of the display 2. The mobile terminal 1 detects a pressed position on the screen of the display 2 by processing an output from the touchscreen panel 6. As shown in Fig. 1, the mobile terminal 1 splits the screen of the display 2 into an input character display area 100 and a software keyboard display area 110 in the character input mode. The input character display area 100 displays a string of characters currently being input. The software keyboard display area 110 displays an image associated with the software keyboard.

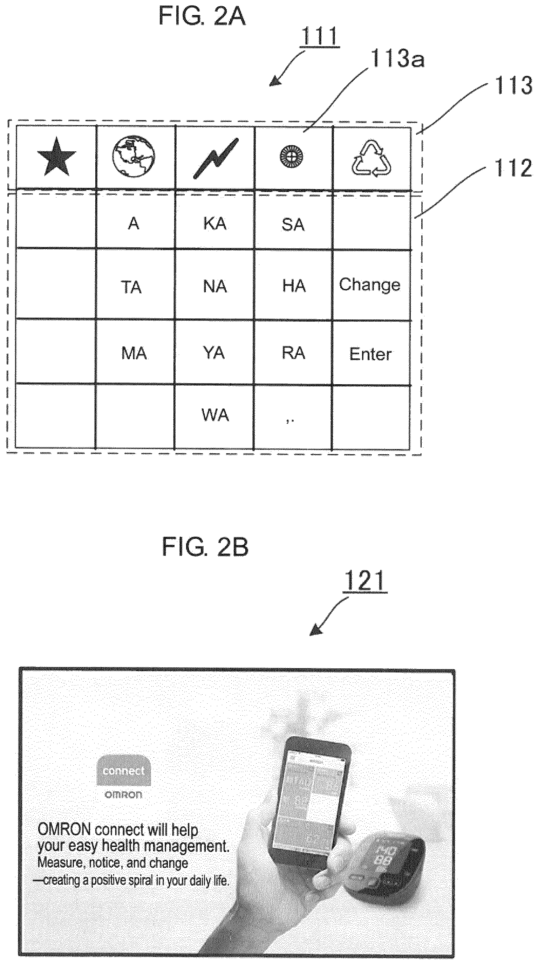

Figs. 2A and 2B are diagrams describing an image associated with the software keyboard appearing in the software keyboard display area 110. Fig. 2A shows a key image. Fig. 2B shows a background image. A key image 111 includes a character key image 112 and a menu key image 113. The character key image 112 includes a group of keys for inputting characters. The menu key image 113 includes a group of keys for, for example, selecting various functions of the software keyboard. The group of keys in the character key image 112 includes, for example, character keys for inputting characters, a change key for changing an input character string, and an enter key for entering the input character string. The group of keys in the menu key image 113 includes a toggle key 113a for switching between the character input mode for inputting characters and a display form change mode for changing the display form of a background image 121. The character input mode corresponds to a first input mode of the claimed invention. The display form change mode corresponds to a second input mode of the claimed invention.

As shown in Fig. 2A, the group of keys in the menu key image 113 includes keys other than the toggle key 113a. Those keys other than the toggle key 113a will not be described.

The background image 121 may be a still image or a moving image. The mobile terminal 1 can display the background image 121 as the background of the character key image 112 on the screen of the display 2. The mobile terminal 1 may generate a composite image by superimposing the character key image 112 on the background image 121 and display the composite image on the screen of the display 2, or may overlay a first layer containing the character key image 112 on a second layer containing the background image 121 and display these layers on the screen of the display 2. In this case, the first layer is transparent.

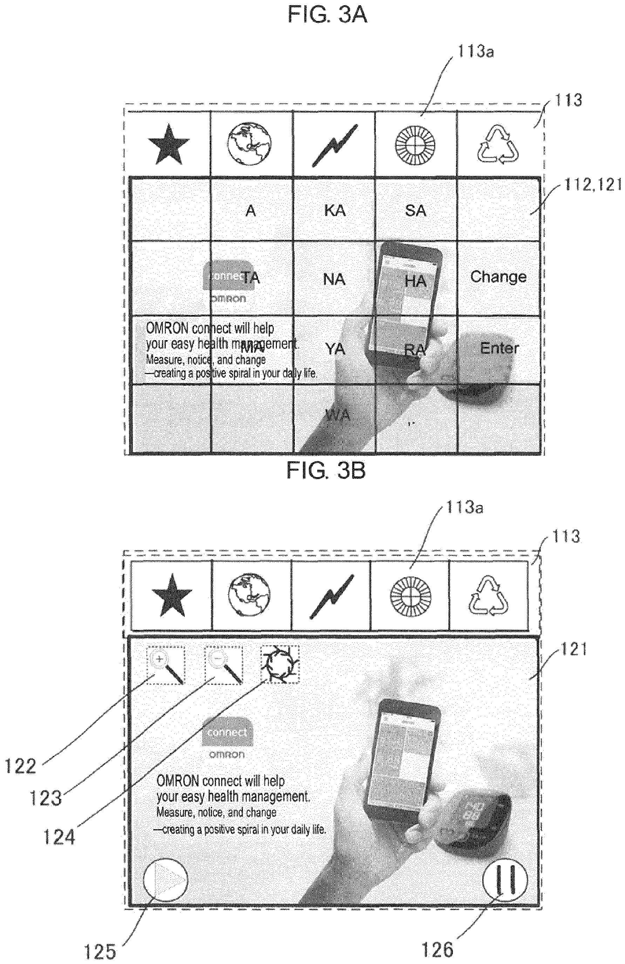

Fig. 3A is a diagram describing an example display screen in the software keyboard display area in the character input mode, and Fig. 3B is a diagram describing an example display screen in the software keyboard display area in the display form change mode. As shown in Fig. 3A, the mobile terminal 1 according to the present embodiment in the character input mode displays a composite image generated by superimposing the character key image 112 on the background image 121 in the software keyboard display area 110. As shown in Fig. 3B, the mobile terminal 1 in the display form change mode displays the background image 121 in the software keyboard display area 110. The mobile terminal 1 in the display form change mode also displays an enlarge key 122, a reduce key 123, and a rotate key 124 on the screen of the display 2. The enlarge key 122 is used for an input to enlarge the background image 121 on the screen of the display 2. The reduce key 123 is used for an input to reduce the background image 121 on the screen of the display 2. The rotate key 124 is used for an input to rotate the background image 121 on the screen of the display 2. The enlarge key 122, the reduce key 123, and the rotate key 124 constantly appear on the background image 121 that is either a still image or a moving image.

The mobile terminal 1 in the display form change mode also displays images of a playback key 125 and a pause key 126 when the background image 121 is a moving image. The playback key 125 is used for an input to start playback and change the playback speed of the background image 121 (moving image) on the screen of the display 2. The pause key 126 is used for an input to stop playback of the background image 121.

The mobile terminal 1 in either the character input mode or the display form change mode displays the menu key image 113. The mobile terminal 1 in either the character input mode or the display form change mode also displays, in the input character display area 100, a string of characters currently being input.

The mobile terminal 1 in the character input mode switches to the display form change mode when detecting the display position of the toggle key 113a being pressed on the screen of the display 2. The mobile terminal 1 in the display form change mode also switches to the character input mode when detecting the display position of the toggle key 113a being pressed on the screen of the display 2. More specifically, the user switches the mode between the character input mode and the display form change mode by pressing the display position of the toggle key 113a on the screen of the display 2.

The user can thus switch the mode to the display form change mode by pressing the display position of the toggle key 113a when feeling distracted by the background image 121 during input of a string of characters. After completing the operation for changing the display form of the background image 121 in the display form change mode, the user can press the display position of the toggle key 113a again to return to the character input mode and resume the character input. In this manner, the user can easily change the display form of the background image 121. This improves user operability.

### 2. Example Configuration

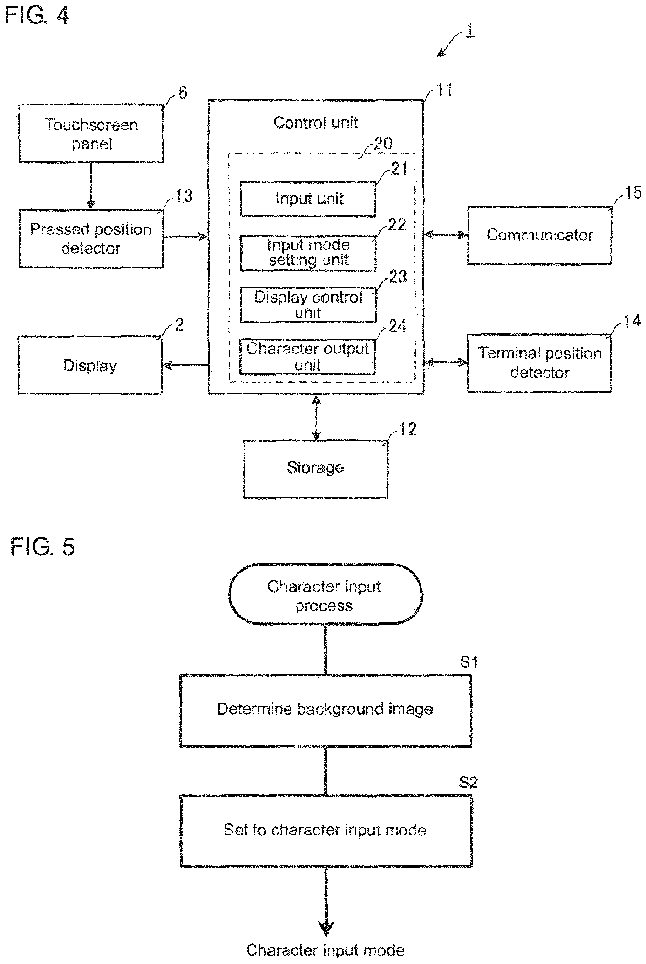

Fig. 4 is a block diagram of the mobile terminal in the present embodiment showing its main components. The mobile terminal 1 according to the present embodiment includes a control unit 11, a storage 12, a pressed position detector 13, a terminal position detector 14, a communicator 15, the display 2, and the touchscreen panel 6.

The control unit 11 includes, as components associated with a software keyboard 20, an input unit 21, an input mode setting unit 22, a display control unit 23, and a character output unit 24. The control unit 11 controls the operation of each unit included in the body of the mobile terminal 1. The components in the control unit 11 associated with the software keyboard 20 (the input unit 21, the input mode setting unit 22, the display control unit 23, and the character output unit 24) will be described in detail later.

The storage 12 stores an input device control program according to one or more embodiments of the present invention. The storage 12 also stores various pieces of content such as application programs, photographs, and moving images. The storage 12 includes storage media such as a memory, a secure digital (SD) memory card, a hard disk drive, and a solid state drive.

The pressed position detector 13 processes an output from the touchscreen panel 6, and detects the screen of the display 2 being pressed as well as the pressed position on the screen. As described above, the touchscreen panel 6 is attached onto the screen of the display 2. The touchscreen panel 6 may be of any known type, including capacitive and surface acoustic wave. The pressed position detector 13 outputs a detected pressed position on the screen of the display 2 to the control unit 11.

The terminal position detector 14 measures the position (latitude and longitude) of the body of the mobile terminal 1 using a global positioning system (GPS).

The communicator 15 performs data communications through a network such as the Internet and voice (phone) communications through a public network.

The components of the control unit 11 associated with the software keyboard 20 (the input unit 21, the input mode setting unit 22, the display control unit 23, and the character output unit 24) will now be described. In this example, the software keyboard 20 corresponds to an input device of the claimed invention.

The input unit 21 receives the pressed position on the screen of the display 2 detected by the pressed position detector 13. The input unit 21 determines an input into the body of the mobile terminal 1 based on the input pressed position on the screen of the display 2 and the image currently appearing on the screen of the display 2.

The input mode setting unit 22 sets the input mode for the body of the mobile terminal 1 to either the character input mode or the display form change mode described above.

The display control unit 23 generates an image to appear on the screen of the display 2, and performs control for displaying the image on the screen.

The character output unit 24 outputs an input character string to an application program. The application program is, for example, a browser, an email application, or a note having a character input field. An email application has a character input field including an address field, a title field, and a text input field. A browser has a character input field including a search box. A note has a character input field including a text input field. The character output unit 24 outputs a character string input in the character input field in the currently selected application program.

The control unit 11 in the mobile terminal 1 includes a hardware central processing unit (CPU), a memory, and other electronic circuits. The hardware CPU executing the input device control program according to one or more embodiments of the present invention operates as the software keyboard 20. The memory includes an area for loading the input device control program according to one or more embodiments of the present invention or temporarily storing data generated in executing the input device control program. The control unit 11 may be a large scale integrated circuit (LSI) integrating, for example, a hardware CPU and a memory. The hardware CPU is a computer implementing an input device control method according to one or more embodiments of the present invention.

### 3. Operation Examples

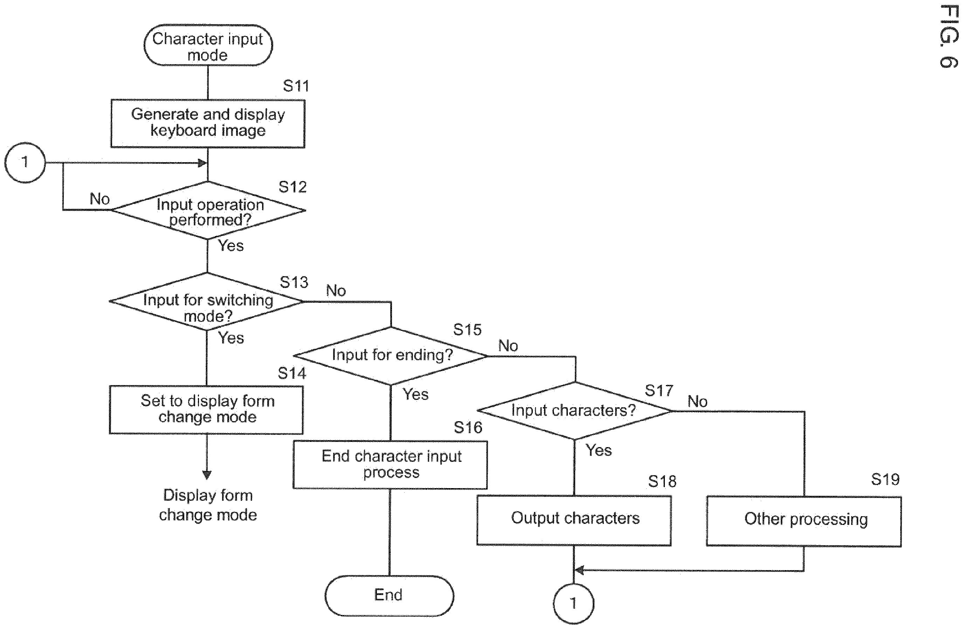

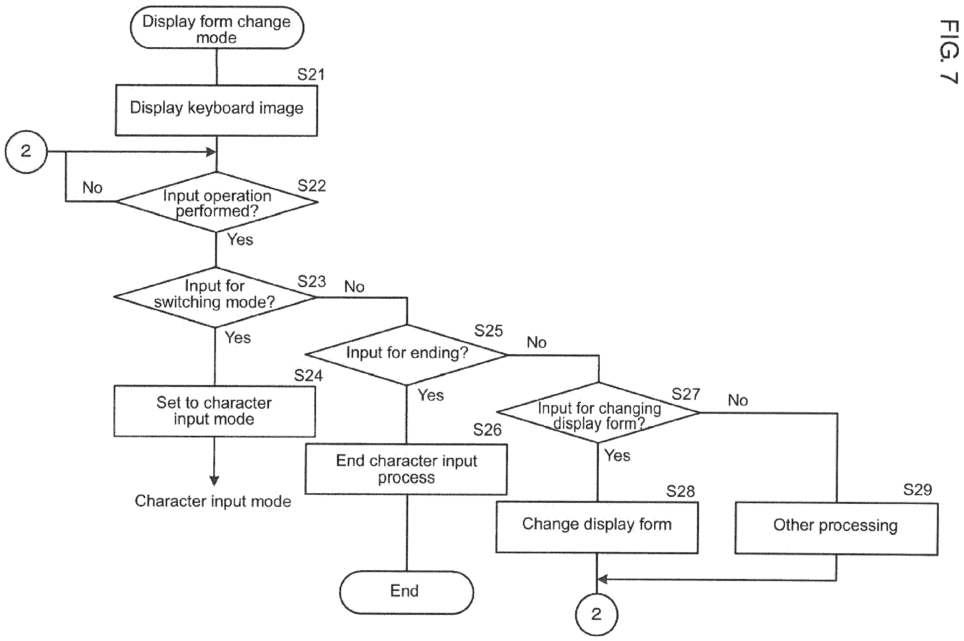

A character input process performed by the mobile terminal 1 according to the present embodiment will now be described. Figs. 5, 6, and 7 are flowcharts showing the character input process performed by the mobile terminal according to the present embodiment. Fig. 5 shows the character input process at the start of character input. Fig. 6 shows the character input process in the character input mode. Fig. 7 shows the character input process in the display form change mode.

The mobile terminal 1 activates the software keyboard 20 when the character input field of an application program is selected.

As shown in Fig. 5, the software keyboard 20 determines the background image 121 (S1). In step S1, the software keyboard 20 may determine the background image 121 as an image predetermined by the user, based on the user's taste or preference obtained from the Internet access history using a browser, or as a map image surrounding the current position of the body of the mobile terminal 1 (that is, the user's current position), or may determine the background image 121 in another manner. The background image 121 determined in step S1 may be an image stored in the storage 12 or in a server connected to the Internet. The background image 121 may be a still image or a moving image. The current position of the body of the mobile terminal 1 is detectable by the terminal position detector 14.

The software keyboard 20 sets the input mode to the character input mode with the input mode setting unit 22 (S2) after determining the background image 121 in step S1. The software keyboard 20 performs the processing associated with the character input mode shown in Fig. 6.

The display control unit 23 generates a composite image (hereafter, a keyboard image with a background) by superimposing the key image on the background image 121 determined in step S1, and displays the composite image on the screen of the display 2 (S11). For example, the display control unit 23 displays the keyboard image with the background generated by overlaying the first layer containing the key image on the second layer containing the background image 121 in the software keyboard display area 110 of the display 2. In this case, the first layer is transparent to allow the user to view the background image 121 contained in the second layer. The keyboard image with the background is, for example, an image shown in Fig. 3A.

The input unit 21 waits for an input operation performed by the user on the mobile terminal 1 (S12). The user performs an input operation on the body of the mobile terminal 1 by pressing the screen of the display 2. The pressed position detector 13 detects the position on the screen of the display 2 pressed by the user based on an output from the touchscreen panel 6, and inputs the detection result into the input unit 21. The input unit 21 detects the user input operation in step S12 when receiving the pressed position on the screen of the display 2 input from the pressed position detector 13.

The input unit 21 determines the type of the current input operation performed by the user. When the input unit 21 detects the current user input operation intended for switching the input mode, the input mode setting unit 22 sets the input mode to the display form change mode (S13 and S14), and performs the processing associated with the display form change mode shown in Fig. 7 described later. When the pressed position is the display position of the toggle key 113a on the display 2, the input unit 21 detects the input intended for switching the input mode.

When the input unit 21 detects the input operation intended for ending the character input, the software keyboard 20 ends the current character input process (S15 and S16). In step S16, the display control unit 23 ends displaying the keyboard image with the background appearing in the software keyboard display area 110 on the screen of the display 2.

When the input unit 21 detects the input operation intended for inputting characters, the character output unit 24 outputs the current input characters (S17 and S18), and returns the processing to step S12. When the input unit 21 detects the input operation intended neither for switching the input mode, ending the character input, nor inputting characters unlike in the above cases, the processing is performed in accordance with the input operation (S19). The processing then returns to step S12.

Thus, the user can input a character string by repeating the input operation for inputting characters. When completely inputting the character string, the user performs an input operation for ending the character input to complete the operation for inputting the character string, and inputs the current input character string into the currently selected application.

When feeling distracted by the background image 121 during the input operation for inputting characters, the user performs an input operation for switching the input mode (pressing the display position of the toggle key 113a).

The processing associated with the display form change mode will now be described with reference to Fig. 7. The display control unit 23 displays the background image 121 determined in step S1 in the software keyboard display area 110 on the screen of the display 2 (S21). In this example, as shown in Fig. 3B, the software keyboard display area 110 displays no key image in step S21 to prevent the visibility of the background image 121 from decreasing.

The input unit 21 waits for an input operation performed by the user on the mobile terminal 1 (S22). The user performs an input operation on the body of the mobile terminal 1 by pressing the screen of the display 2 in the same manner as in the character input mode described above. The pressed position detector 13 detects the position on the screen of the display 2 pressed by the user based on an output from the touchscreen panel 6, and inputs the detection result into the input unit 21. The input unit 21 detects the user input operation in step S22 when receiving the pressed position on the screen of the display 2 from the pressed position detector 13.

The input unit 21 determines the type of the current input operation performed by the user. When the input unit 21 detects the current user input operation intended for switching the input mode, the input mode setting unit 22 sets the input mode to the character input mode (S23 and S24), and performs the processing associated with the character input mode shown in Fig. 6. When the pressed position is the display position of the toggle key 113a on the display 2, the input unit 21 detects the input intended for switching the input mode.

When the input unit 21 detects the input operation intended for ending the character input, the software keyboard 20 ends the current character input process (S25 and S26). In step S26, the display control unit 23 ends displaying the background image 121 appearing in the software keyboard display area 110 on the screen of the display 2.

When detecting the input operation intended for changing the display form of the background image 121, the input unit 21 changes the display form in accordance with the current operation (S27 and S28), and returns the processing to step S22.

When the current input operation is the operation of the enlarge key 122, the display control unit 23 enlarges the magnification of the background image 121 appearing in the software keyboard display area 110 by a predetermined percent from the current size. When the current input operation is the operation of the reduce key 123, the display control unit 23 reduces the magnification of the background image 121 appearing in the software keyboard display area 110 by a predetermined percent from the current size. When the current input operation is the operation of the rotate key 124, the display control unit 23 rotates the background image 121 appearing in the software keyboard display area 110 clockwise by a predetermined angle from the current position.

A part of the background image 121 deviating from the software keyboard display area 110 after enlarged, reduced, or rotated is not displayed. A part of the background image 121 not to be displayed in the software keyboard display area 110 may be filled with a predetermined background color, such as white, red, or black.

When the background image 121 is a moving image and the current input operation is the operation of the pause key 126, the display control unit 23 pauses the playback of the moving image. When the background image 121 is a moving image and the current input operation is the operation of the playback key 125, the display control unit 23 sets the playback speed differently depending on the current playback speed, or specifically sets the speed to 1.3x when the current speed is 1x, to 0.8x when the current speed is 1.3x, to 1x when the current speed is 0.8x, and to 1x when the playback has been paused.

When the input unit 21 detects the input operation intended neither for switching the input mode, ending the character input, nor changing the display form described above, the processing is performed in accordance with the input operation (S29). The processing then returns to step S22.

The user can thus pause the operation for inputting characters and check the background image 121 when feeling distracted by the background image 121 during the input character operation using the software keyboard 20. The user can also change the display form of the background image 121, and thus can set an easily viewable form of display and then check the image part being distracted.

Although not specified in the embodiments described above, the software keyboard 20 in the character input mode displays neither the enlarge key 122, the reduce key 123, the rotate key 124, the playback key 125, nor the pause key 126 in the software keyboard display area 110, and thus receives no input operation for changing the display form of the background image 121. More specifically, the software keyboard 20 does not receive any user input operation for inputting characters as the operation for changing the display form of the background image 121. This prevents the display form of the background image 121 from being changed unintentionally when the user is performing an input operation for inputting characters.

The software keyboard 20 in the display form change mode does not display the character key image 112 in the software keyboard display area 110, and thus receives no input operation for inputting characters. More specifically, the software keyboard 20 does not receive any user input operation for changing the display form of the background image 121 as the operation for inputting characters. This prevents a character input operation from being received unintentionally when the user is performing an input operation for changing the display form of the background image 121.

When the background image 121 is a piece of moving image content stored in an Internet server, the display control unit 23 may stream the moving image content. This can save the storage capacity of the storage 12 for storing a moving image as the background image 121.

### 4. Modifications

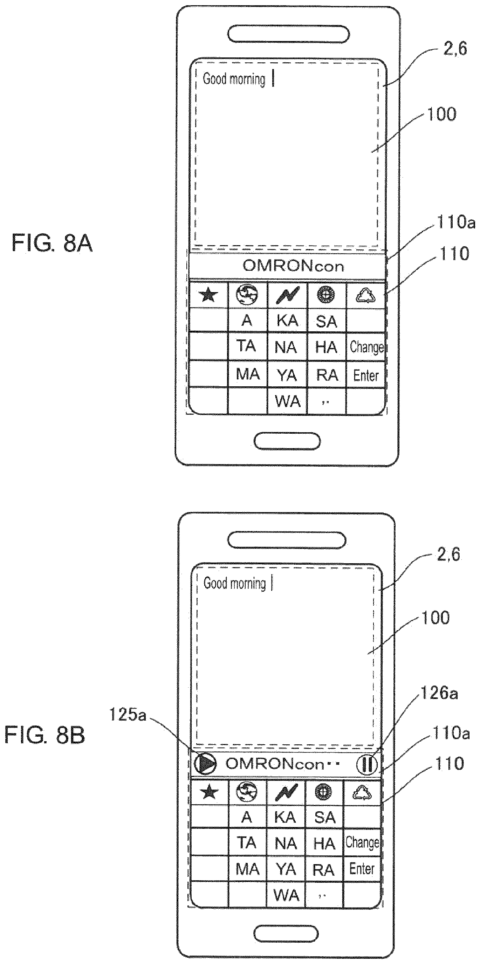

In the above embodiments, the software keyboard display area 110 displays the composite image obtained by superimposing the key image on the background image 121. As shown in Figs. 8A and 8B, the software keyboard display area 110 may include a telop display area 110a for displaying a telop. Fig. 8A is a diagram describing the display screen in the software keyboard display area 110 in the character input mode, and Fig. 8B is a diagram describing the display screen in the software keyboard display area 110 in the display form change mode.

As shown in Fig. 8A, the telop display area 110a displays neither the playback key 125a nor the pause key 126a in the character input mode. As shown in Fig. 8B, the telop display area 110a displays the playback key 125a and the pause key 126a in the display form change mode. The playback key 125a is used for an operation to change the display speed of a telop currently being displayed. The pause key 126a is used for an operation to pause the telop currently being displayed.

In this modification, the software keyboard display area 110 displays the key image 111 also in the display form change mode. However, the software keyboard 20 receives no input operation for inputting characters in the display form change mode.

The software keyboard 20 also performs the processing shown in Figs. 5, 6, and 7 in this modification.

In the present modification, the software keyboard 20 may receive an input operation for inputting characters in the display form change mode.

Although the input device (software keyboard) of the above embodiments is used in the mobile terminal 1 as described above, the input device may also be used in, for example, a desktop personal computer.

The present invention is not limited to the embodiments described above, but the components may be modified without departing from the spirit and scope of the invention in its implementation. The components described in the above embodiments may be combined as appropriate to provide various aspects of the invention. For example, some of the components described in each embodiment described above may be eliminated. Further, components in different embodiments may be combined as appropriate.

The correspondence between the structures of the claimed invention and the structures in the above embodiments may be expressed as specified in the appendix below.

### Appendix

An input device (20), comprising:
an input unit (21) configured to receive an input corresponding to a pressed position on a screen of a display (2);
a display control unit (23) configured to display a key image (111) associated with a keyboard on the screen of the display (2) in a manner superimposed on a background image (121); and
an input mode setting unit (22) configured to set, in response to an input for selecting an input mode received by the input unit (21), an input mode of the input unit (21) to a first input mode to receive a character input based on the key image (111) or to a second input mode to receive an input for changing a display form of the background image (121) in accordance with the received input.

### REFERENCE SIGNS LIST

- 1: mobile terminal
- 2: display
- 6: touchscreen panel
- 11: control unit
- 12: storage
- 13: pressed position detector
- 14: terminal position detector
- 15: communicator
- 20: software keyboard
- 21: input unit
- 22: input mode setting unit
- 23: display control unit
- 24: character output unit
- 100: input character display area
- 110: software keyboard display area
- 110a: telop display area
- 111: key image
- 112: character key image
- 113: menu key image
- 121: background image

## Claims

1. An input device, comprising:
an input unit (21) configured to receive an input corresponding to a pressed position on a screen of a display (2);
a display control unit (23) configured to display a key image (111) associated with a keyboard on the screen of the display (2) in a manner superimposed on a background image (121); and
an input mode setting unit (22) configured to set, in response to an input for selecting an input mode received by the input unit (21), an input mode of the input unit (21) to a first input mode to receive a character input based on the key image (111) or to a second input mode to receive an input for changing a display form of the background image (121) in accordance with the received input.

2. The input device according to claim 1, wherein
the first input mode is a mode to receive no input for changing the display form of the background image (121), and
the second input mode is a mode to receive no character input based on the key image (111).

3. The input device according to claim 1 or claim 2, wherein
the second input mode is a mode to receive an input to enlarge or reduce the background image (121) as the input for changing the display form of the background image (121).

4. The input device according to any one of claims 1 to 3, wherein
when the background image (121) is a moving image, the second input mode is a mode to receive an input for changing a playback speed, pausing a playback, or resuming the playback as the input for changing the display form of the background image (121).

5. The input device according to claim 4, wherein
the background image (121) is an image associated with moving image content distributed by an external device and streamed.

6. The input device according to any one of claims 1 to 5, wherein
the background image (121) is an image associated with a telop.

7. The input device according to any one of claims 1 to 6, wherein
when the input mode setting unit sets the input unit (21) to the second input mode, the display control unit (23) displays the key image (111) in an unviewable manner on the screen of the display (2).

8. A mobile terminal (1), comprising:
the input device according to any one of claims 1 to 7.

9. An input device control method implementable by a computer, the method comprising:
receiving an input corresponding to a pressed position on a screen of a display (2);
displaying a key image (111) associated with a keyboard on the screen of the display (2) in a manner superimposed on a background image (121); and
setting, in response to an input for selecting an input mode received in the receiving the input, an input mode in the receiving the input to a first input mode to receive a character input based on the key image (111) or to a second input mode to receive an input for changing a display form of the background image (121) in accordance with the received input.

10. An input device control program causing a computer to implement:
_{(2);}receiving an input corresponding to a pressed position on a screen of a display
displaying a key image (111) associated with a keyboard on the screen of the display (2) in a manner superimposed on a background image (121); and
setting, in response to an input for selecting an input mode received in the receiving the input, an input mode in the receiving the input to a first input mode to receive a character input based on the key image (111) or to a second input mode to receive an input for changing a display form of the background image (121) in accordance with the received input.
